(19) **Europäisches Patentamt / European Patent Office / Office européen des brevets**

(11) **EP 4 601 210 A1**

(12) # EUROPEAN PATENT APPLICATION

(43) Date of publication:
**13.08.2025 Bulletin 2025/33**

(21) Application number: **24156885.6**

(22) Date of filing: **09.02.2024**

(51) International Patent Classification (IPC):
**H04B 7/0456** (2017.01)      **H04B 7/06** (2006.01)

(52) Cooperative Patent Classification (CPC):
**H04B 7/0487; H04B 7/0478; H04B 7/0626;
H04B 7/063; H04B 7/0639**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventors:
• **RIVERA, Luis**
**81245 Munich (DE)**
• **KOVALCHUKOV, Roman**
**33720 Tampere (FI)**
• **BROZZU, Francesco**
**92340 Bourg-la-Reine (FR)**
• **JARDEL, Fanny**
**91190 Gif sur Yvette (FR)**
• **HILLERY, William**
**Lafayette 47905 (US)**

(74) Representative: **Page White Farrer**
**Bedford House
21a John Street
London WC1N 2BF (GB)**

(54) **METHOD, APPARATUS AND COMPUTER PROGRAM RELATING TO CHANNEL STATE INFORMATION REPORT CONFIGURATIONS FOR RADIO TRANSMISSIONS**

(57)      A technique comprising: receiving from a transmitting device an indication of a primary channel state information report configuration and a secondary channel state information report configuration; and transmitting to the transmitting device a report indicating one or more channel state information reporting quantity values according to the primary channel state information report configuration, and indicating one or more channel state information reporting quantity values according to the secondary channel state information report configuration.

Fig. 4

**Description**

TECHNICAL FIELD

Various example embodiments of this disclosure relate to a method, apparatus and computer program and in particular but not exclusively to channel state information report configurations and channel state information reporting for radio transmissions.

BACKGROUND

A radio access network may, for example, enable communications between two or more user equipments, and/or enable the transfer of data between one or more user equipments and one or more data networks.

A transmission from a radio access network entity to a user equipment may involve using a precoding matrix determined according to one of a plurality of channel state information report configurations.

SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

Apparatus comprising means for: receiving from a transmitting device an indication of a primary channel state information report configuration and a secondary channel state information report configuration; and transmitting to the transmitting device a report indicating one or more channel state information reporting quantity values according to the primary channel state information report configuration, and indicating one or more channel state information reporting quantity values according to the secondary channel state information report configuration.

The apparatus may further comprise means for: performing channel state information reporting quantity value calculation based on the primary and secondary channel state information report configurations; and sorting the channel state information calculation from low resolution to high resolution, or from high resolution to low resolution.

The apparatus may further comprise means for: calculating one or more metrics, and from the one or more metrics calculating the one or more reporting quantity values according to the primary and secondary channel state information report configurations.

The apparatus may be a user equipment and the transmitting device may be a network access node.

Apparatus comprising means for: transmitting to a receiving device an indication of a primary channel state information report configuration and a secondary channel state information report configuration; and receiving from the receiving device a report indicating one or more channel state information reporting quantity values according to the primary channel state information report configuration, and indicating one or more channel state information reporting quantity values according to the secondary channel state information report configuration.

The apparatus may comprise means for: based at least partly on the report, determining one or more of: whether to continue with the primary channel state information report configuration for the receiving device, or whether to continue with the secondary channel state information report configuration for the receiving device.

The apparatus may be an access network node, and the receiving device may be a user equipment.

A method comprising: receiving from a transmitting device an indication of a primary channel state information report configuration and a secondary channel state information report configuration; and transmitting to the transmitting device a report indicating one or more channel state information reporting quantity values according to the primary channel state information report configuration, and indicating one or more channel state information reporting quantity values according to the secondary channel state information report configuration.

The method may further comprise: performing channel state information reporting quantity value calculation based on the primary and secondary channel state information report configurations; and sorting the channel state information calculation from low resolution to high resolution, or from high resolution to low resolution.

The method may further comprise: calculating one or more metrics, and from the one or more metrics calculating the one or more reporting quantity values according to the primary and secondary channel state information report configurations.

The method may be performed by a user equipment and the transmitting device may be a network access node.

A method comprising: transmitting to a receiving device an indication of a primary channel state information report configuration and a secondary channel state information report configuration; and receiving from the receiving device a report indicating one or more channel state information reporting quantity values according to the primary channel state information report configuration, and indicating one or more channel state information reporting quantity values according to the secondary channel state information report configuration.

The method may comprise: based at least partly on the report, determining one or more of: whether to continue with the primary channel state information report configuration for the receiving device, or whether to continue with the secondary channel state information report configuration for the receiving device.

The method may be performed by an access network node, and the receiving device may be a user equipment.

Apparatus comprising: at least one processor; and at least one memory including computer program code, the at least one memory and computer program code configured to, with the at least one processor, cause the apparatus to perform: receiving from a transmitting device an indication of a primary channel state information report configuration and a secondary channel state information report configuration; and transmitting to the transmitting device a report indicating one or more channel state information reporting quantity values according to the primary channel state information report configuration, and indicating one or more channel state information reporting quantity values according to the secondary channel state information report configuration.

The at least one memory and computer program code may be configured to, with the at least one processor, cause the apparatus to: perform channel state information reporting quantity value calculation based on the primary and secondary channel state information report configurations; and sort the channel state information calculation from low resolution to high resolution, or from high resolution to low resolution.

The at least one memory and computer program code may be configured to, with the at least one processor, cause the apparatus to: calculate one or more metrics, and from the one or more metrics calculate the one or more reporting quantity values according to the primary and secondary channel state information report configurations.

The apparatus may be a user equipment and the transmitting device may be a network access node.

Apparatus comprising: at least one processor; and at least one memory including computer program code, the at least one memory and computer program code configured to, with the at least one processor, cause the apparatus to perform: transmitting to a receiving device an indication of a primary channel state information report configuration and a secondary channel state information report configuration; and receiving from the receiving device a report indicating one or more channel state information reporting quantity values according to the primary channel state information report configuration, and indicating one or more channel state information reporting quantity values according to the secondary channel state information report configuration.

The at least one memory and computer program code may be configured to, with the at least one processor, cause the apparatus to: based at least partly on the report, determine one or more of: whether to continue with the primary channel state information report configuration for the receiving device, or whether to continue with the secondary channel state information report configuration for the receiving device.

The apparatus may be an access network node, and the receiving device may be a user equipment.

Apparatus comprising: receiving circuitry for receiving from a transmitting device an indication of a primary channel state information report configuration and a secondary channel state information report configuration; and transmitting circuitry for transmitting to the transmitting device a report indicating one or more channel state information reporting quantity values according to the primary channel state information report configuration, and indicating one or more channel state information reporting quantity values according to the secondary channel state information report configuration.

Apparatus comprising: transmitting circuitry for transmitting to a receiving device an indication of a primary channel state information report configuration and a secondary channel state information report configuration; and receiving circuitry for receiving from the receiving device a report indicating one or more channel state information reporting quantity values according to the primary channel state information report configuration, and indicating one or more channel state information reporting quantity values according to the secondary channel state information report configuration.

A computer readable medium comprising program instructions stored thereon for performing: receiving from a transmitting device an indication of a primary channel state information report configuration and a secondary channel state information report configuration; and transmitting to the transmitting device a report indicating one or more channel state information reporting quantity values according to the primary channel state information report configuration, and indicating one or more channel state information reporting quantity values according to the secondary channel state information report configuration.

A computer readable medium comprising program instructions stored thereon for performing: transmitting to a receiving device an indication of a primary channel state information report configuration and a secondary channel state information report configuration; and receiving from the receiving device a report indicating one or more channel state information reporting quantity values according to the primary channel state information report configuration, and indicating one or more channel state information reporting quantity values according to the secondary channel state information report configuration.

A non-transitory computer readable medium comprising program instructions stored thereon for performing: receiving from a transmitting device an indication of a primary channel state information report configuration and a secondary channel state information report configuration; and transmitting to the transmitting device a report indicating one or more channel state information reporting quantity values according to the primary channel state information report configuration, and indicating one or more channel state information reporting quantity values according to the secondary channel state information report configuration.

A non-transitory computer readable medium comprising program instructions stored thereon for performing: transmitting to a receiving device an indication of a primary channel state information report configuration and a secondary channel state information report configuration; and receiving from the receiving device a report indicating one or more channel state information reporting quantity values according to the primary channel state information report configuration, and indicating one or more channel state information reporting quantity values according to the secondary channel state information report configuration.

A computer program comprising computer executable code which when run on at least one processor is configured to cause an apparatus at least to: receive from a transmitting device an indication of a primary channel state information report configuration and a secondary channel state information report configuration; and transmit to the transmitting device a report indicating one or more channel state information reporting quantity values according to the primary channel state information report configuration, and indicating one or more channel state information reporting quantity values according to the secondary channel state information report configuration.

A computer program comprising computer executable code which when run on at least one processor is configured to cause an apparatus at least to: transmit to a receiving device an indication of a primary channel state information report configuration and a secondary channel state information report configuration; and receive from the receiving device a report indicating one or more channel state information reporting quantity values according to the primary channel state information report configuration, and indicating one or more channel state information reporting quantity values according to the secondary channel state information report configuration.

The channel state information reporting quantity values according to the primary and secondary channel state information report configurations may comprise absolute reporting quantity values.

The one or more channel state information reporting quantity values according to the secondary channel state information report configuration may comprise one or more offsets relative to one or more reference values.

The one or more reference reporting quantity values may comprise one or more of: the reporting quantity value according to the primary channel state information report configuration; a reporting quantity value according to another channel state information report configuration; a metric from which the reporting quantity values according to the primary and secondary channel state information report configurations were calculated; a reporting quantity value according to a channel state information report configuration with the highest resolution among the primary and secondary channel state information report configurations; a reporting quantity value according to a channel state information report configuration with the lowest resolution among the primary and secondary channel state information report configurations.

The report may indicate a comparison between a plurality of channel information state report configurations comprising the primary and secondary channel state information report configurations; and wherein the reference reporting quantity value comprises the lowest reporting quantity value among the primary and secondary channel state information report configurations, or the highest reporting quantity value among the primary and secondary channel state information report configurations.

The report may indicate a comparison between a sequence of channel state information report configurations comprising the primary and secondary channel state information report configurations; and the report indicates an offset between the reporting quantity value according to a primary or secondary channel state information report configuration and a reporting quantity value for the one of the plurality of channel state information report configurations preceding the primary or secondary channel state information report configuration in the sequence.

The report may indicate one of two values indicating loss and gain of the secondary channel state information report configuration relative to the primary channel state information report configuration or a given reference channel state information report configuration.

The one or more reporting quantities for which the report provides values according to the primary and secondary channel state information report configurations may comprise one or more of: channel quality information indicators; rank indicators; number of beams detected over a threshold; number of delay taps detected over a threshold; number of non-zero coefficients detected; line-of-sight/non-line-of-sight flag; single beam/multi-beam flag.

An apparatus comprising means for: making measurements of one or more signals transmitted by a transmitting device; determining, based on the measurements, that one or more channel state information report configurations satisfy one or more conditions; and transmitting to the transmitting device a report including channel state information according to the one or more channel state information report configurations.

The one or more conditions may comprise a condition that one or more channel quality thresholds are met.

The one or more channel quality thresholds may be indicated by the transmitting device.

The one or more conditions may comprise a condition that a calculated channel quality is included in the top n results among a plurality of channel state information report configurations. n may be one. n may be indicated by the transmitting device.

The apparatus may further comprise means for: transmitting to the transmitting device a message indicating the one or more channel state information report configurations; and in response to receiving a scheduling message from the transmitting device, transmitting to the transmitting device the channel state information for the determined one or more channel state information report configurations.

The apparatus may further comprise means for: receiving from the transmitting device an indication of a primary channel state information report configuration and one or more secondary channel state information report configurations; and wherein the one or more channel state information report configurations satisfying the one or more conditions comprise one or more of the primary and secondary channel state information report configurations.

An apparatus comprising means for: transmitting reference signals for a receiving device; and receiving from the receiving device channel state information for one or more channel state information report configurations determined by the receiving device to satisfy one or more conditions, based on measurements of the reference signals.

Receiving the channel state information for the one or more channel state information report configurations may be done in response to transmitting a scheduling message to the receiving device in response to a message from the receiving device indicating the one or more channel state information report configurations.

The apparatus may further comprise means for transmitting to the receiving device an indication of a primary channel state information report configuration and one or more secondary channel state information report configurations; and the one or more channel state information report configurations for which channel state information is received from the receiving device may comprise one or more of the primary and secondary channel state information report configurations.

A method comprising: making measurements of one or more signals transmitted by a transmitting device; determining, based on the measurements, that one or more channel state information report configurations satisfy one or more conditions; and transmitting to the transmitting device a report including channel state information according to the one or more channel state information report configurations.

The one or more conditions may comprise a condition that one or more channel quality thresholds are met.

The one or more channel quality thresholds may be indicated by the transmitting device.

The one or more conditions may comprise a condition that a calculated channel quality is included in the top n results among a plurality of channel state information report configurations. n may be one. n may be indicated by the transmitting device.

The method may further comprise: transmitting to the transmitting device a message indicating the one or more channel state information report configurations; and in response to receiving a scheduling message from the transmitting device, transmitting to the transmitting device the channel state information for the determined one or more channel state information report configurations.

The method may further comprise: receiving from the transmitting device an indication of a primary channel state information report configuration and one or more secondary channel state information report configurations; and wherein the one or more channel state information report configurations satisfying the one or more conditions comprise one or more of the primary and secondary channel state information report configurations.

A method comprising: transmitting reference signals for a receiving device; and receiving from the receiving device channel state information for one or more channel state information report configurations determined by the receiving device to satisfy one or more conditions, based on measurements of the reference signals.

Receiving the channel state information for the one or more channel state information report configurations may be done in response to transmitting a scheduling message to the receiving device in response to a message from the receiving device indicating the one or more channel state information report configurations.

The method may further comprise transmitting to the receiving device an indication of a primary channel state information report configuration and one or more secondary channel state information report configurations; and the one or more channel state information report configurations for which channel state information is received from the receiving device may comprise one or more of the primary and secondary channel state information report configurations.

Apparatus comprising: at least one processor; and at least one memory including computer program code, the at least one memory and computer program code configured to, with the at least one processor, cause the apparatus to perform: making measurements of one or more signals transmitted by a transmitting device; determining, based on the measurements, that one or more channel state information report configurations satisfy one or more conditions; and transmitting to the transmitting device a report including channel state information according to the one or more channel state information report configurations.

The one or more conditions may comprise a condition that one or more channel quality thresholds are met.

The one or more channel quality thresholds may be indicated by the transmitting device.

The one or more conditions may comprise a condition that a calculated channel quality is included in the top n results among a plurality of channel state information report configurations. n may be one. n may be indicated by the transmitting device.

The at least one memory and computer program code may be configured to, with the at least one processor, cause the apparatus to: transmit to the transmitting device a message indicating the one or more channel state information report configurations; and in response to receiving a scheduling message from the transmitting device, transmit to the transmitting device the channel state information for the determined one or more channel state information report configurations.

The at least one memory and computer program code may be configured to, with the at least one processor, cause the apparatus to: receive from the transmitting device an indication of a primary channel state information report configuration and one or more secondary channel state information report configurations; and the one or more channel state information report configurations satisfying the one or more conditions may comprise one or more of the primary and secondary channel state information report configurations.

Apparatus comprising: at least one processor; and at least one memory including computer program code, the at least one memory and computer program code configured to, with the at least one processor, cause the apparatus to perform: transmitting reference signals for a receiving device; and receiving from the receiving device channel state information for one or more channel state information report configurations determined by the receiving device to satisfy one or more conditions, based on measurements of the reference signals.

Receiving the channel state information for the one or more channel state information report configurations may be done in response to transmitting a scheduling message to the receiving device in response to a message from the receiving device indicating the one or more channel state information report configurations.

The at least one memory and computer program code may be configured to, with the at least one processor, cause the apparatus to: transmit to the receiving device an indication of a primary channel state information report configuration and one or more secondary channel state information report configurations; and the one or more channel state information report configurations for which channel state information is received from the receiving device may comprise one or more of the primary and secondary channel state information report configurations.

Apparatus comprising: making circuitry for making measurements of one or more signals transmitted by a transmitting device; determining circuitry for determining, based on the measurements, that one or more channel state information report configurations satisfy one or more conditions; and transmitting circuitry for transmitting to the transmitting device a report including channel state information according to the one or more channel state information report configurations.

Apparatus comprising: transmitting circuitry for transmitting reference signals for a receiving device; and receiving circuitry for receiving from the receiving device channel state information for one or more channel state information report configurations determined by the receiving device to satisfy one or more conditions, based on measurements of the reference signals.

A computer readable medium comprising program instructions stored thereon for performing: making measurements of one or more signals transmitted by a transmitting device; determining, based on the measurements, that one or more channel state information report configurations satisfy one or more conditions; and transmitting to the transmitting device a report including channel state information according to the one or more channel state information report configurations.

A computer readable medium comprising program instructions stored thereon for performing: transmitting reference signals for a receiving device; and receiving from the receiving device channel state information for one or more channel state information report configurations determined by the receiving device to satisfy one or more conditions, based on measurements of the reference signals.

A non-transitory computer readable medium comprising program instructions stored thereon for performing: making measurements of one or more signals transmitted by a transmitting device; determining, based on the measurements, that one or more channel state information report configurations satisfy one or more conditions; and transmitting to the transmitting device a report including channel state information according to the one or more channel state information report configurations.

A non-transitory computer readable medium comprising program instructions stored thereon for performing: transmitting reference signals for a receiving device; and receiving from the receiving device channel state information for one or more channel state information report configurations determined by the receiving device to satisfy one or more conditions, based on measurements of the reference signals.

A computer program comprising computer executable code which when run on at least one processor is configured to cause an apparatus at least to: make measurements of one or more signals transmitted by a transmitting device; determine, based on the measurements, that one or more channel state information report configurations satisfy one or more conditions; and transmit to the transmitting device a report including channel state information according to the one or more channel state information report configurations.

A computer program comprising computer executable code which when run on at least one processor is configured to cause an apparatus at least to: transmit reference signals for a receiving device; and receive from the receiving device channel state information for one or more channel state information report configurations determined by the receiving device to satisfy one or more conditions, based on measurements of the reference signals.

DESCRIPTION OF DRAWINGS

Some example embodiments will now be described, by way of non-limiting and illustrative example only, with reference to the accompanying drawings in which:

Fig, 1 shows a representation of an example of a communication system;
Fig. 2 shows a representation of an example of apparatus for implementing one or more network functions of the communication system;
Fig. 3 shows a representation of an example of user equipment according to some example embodiments;
Fig. 4 shows a representation of an example of operations at a user equipment according to some example embodiments;
Fig. 5 shows a representation of an example of operations at an access node according to some example embodiments;
Fig. 6 shows a representation of an example of combined operations at a user equipment and an access node according to example embodiments;
Fig. 7 shows a representation of an example of stage-by-stage collection and reporting of CSI metrics for an arbitrary modular CSI codebook.
Fig. 8 shows a representation of an example of operations at a user equipment according to some more example embodiments;

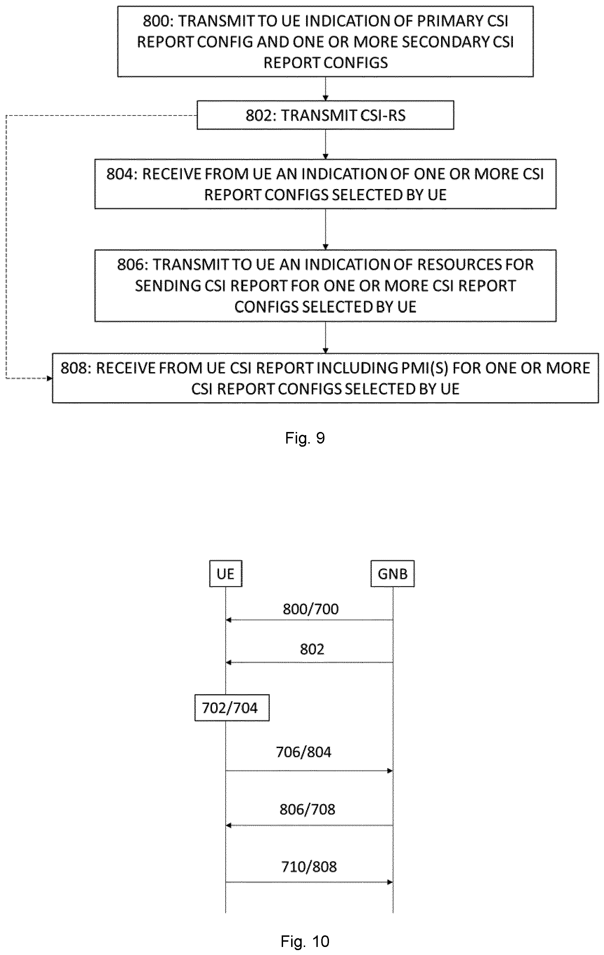

Fig. 9 shows a representation of an example of operations at an access node according to some more example embodiments;
Fig. 10 shows a representation of an example of combined operations at a user equipment and an access node according to some more example embodiments;
Fig. 11 shows a representation of determining and reporting channel state information for best channel state information report configurations, according to some example embodiments;
Fig. 12 shows a representation of a nested calculation technique according to some example embodiments;
Fig. 13 shows a representation of an example of codebook nesting and obtention of metrics for comparison between a primary and a secondary channel state information configuration according to some example embodiments;
Fig. 14 shows a representation of nested CSI codebook output calculation and CQI/RI format for a plurality of tested CSI report configs, according to some example embodiments;
Fig. 15 shows a representation of transformation and compression of a space-frequency channel/precoding matrix tensor set, according to some example embodiments;
Fig. 16 shows a representation of the structure of Release 15/16 Type II codebook, used in some example embodiments;
Fig. 17 illustrates a comparison of beam selection mechanisms for two example codebook types namely 3GPP Type I and Type II codebooks used in some example embodiments;
Fig.s 18(a) and (b) illustrates the nesting of examples of codebook configurations, according to some example embodiments; and
Fig.s 19 and 20 show results of a simulation for some example embodiments.

DETAILED DESCRIPTION

In the following, various example embodiments are explained for the example of a user equipment operating according to a 3GPP 5$^{th}$ generation (5G) communication protocol, but the example embodiments may also be applicable to user equipments operating according to other communication protocols.
In the following, various example embodiments are explained for the example of one type of random access procedure used for a 5G new radio (NR) access network, but the embodiments may also be applicable to other types of random access procedures.

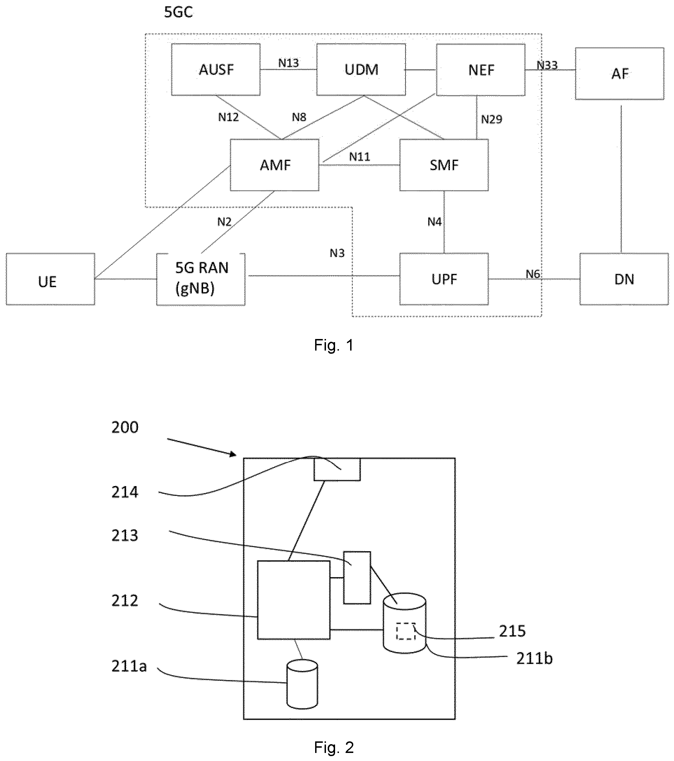

Fig. 1 shows a schematic representation of a 5G communication system (5GS). The 5GS may comprise a user equipment (UE), an access network such as a 5G radio access network (5G-RAN) or next generation radio access network (NG-RAN), a 5G core network (5GC), and one or more application functions. An application function may be deployed in the 5GS as trusted application function or may be deployed or host on one or more application servers of the data network. Such application functions are untrusted application functions. The 5GS connects the UE to a data network the access network and the 5GC (e.g., a UPF of the 5GC).
The 5G-RAN may comprise one or more radio access nodes, such as gNodeB (GNB). A gNB may include one or more gNodeB (GNB) distributed units connected to one or more gNodeB (GNB) centralized units .

The 5GC may comprise the following network functions: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF), and a user plane function (UPF). Fig. 1 also shows the various interfaces (N1, N2 etc.) that may be implemented between the various elements of the system.

Figure 2 illustrates an example of a control apparatus 200 for implementing an instance of a function of the radio access network such as the gNB in Figure 1. The control apparatus 200 may comprise at least one random access memory (RAM) 211a, at least on read only memory (ROM) 211b, at least one processor 212, 213 and an input/output network interface 214. The at least one processor 212, 213 may be coupled to the RAM 211a and the ROM 211b. The at least one processor 212, 213 may be configured to execute an appropriate software code 215. The Execution of the software code 215 may for example allow to perform one or more steps may cause the apparatus to perform one or more of the present aspects operations for implementing an instance function of the access network. The software code 215 may be stored in the ROM 211b. The control apparatus 200 may be interconnected with another control apparatus 200 for implementing one or more instances of other functions of the access network or core network.

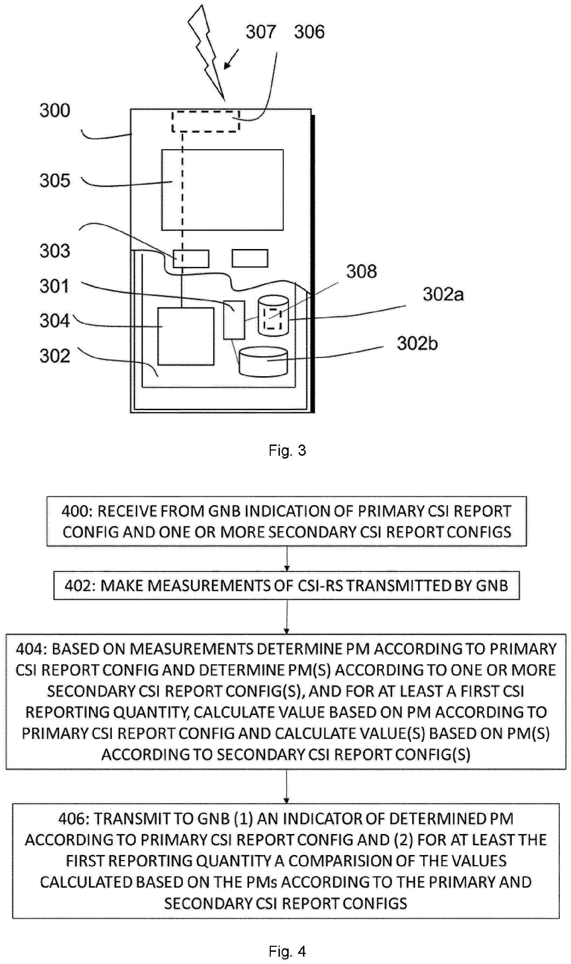

Fig. 3 illustrates an example of a communication device 300, such as the user equipment (UE) illustrated in Fig. 1 and mentioned in the description of example embodiments below. The communication device 300 may be provided by any device capable of sending and receiving radio signals. Non-limiting examples of a communication device 300 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 300 may comprise a transceiver for transmitting and/or receiving, for example, wireless signals carrying communications, for example radio signals. The communications may be one or more of voice, electronic mail (email), text messages, multimedia data, machine data and so on.

The communication device 300 may receive wireless signals (e.g., radio signals) over an air or radio interface 307 via appropriate apparatus for receiving and may transmit wireless signals via appropriate apparatus for transmitting radio signals. In Fig. 3 transceiver is designated schematically by block 306. The transceiver 306 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 300 may be provided with at least one processor 301, at least one memory ROM 302a, at least one RAM 302b and other possible components 303 for use in software and hardware aided execution of tasks it is designed to perform, including control of access to and communications with access networks (e.g., the 5G-RAN or NG-RAN illustrated in Fig. 1) and other communication devices. The at least one processor 201 is coupled to the RAM 302b and the ROM 302a. The at least one processor 301 may be configured to execute an appropriate software code 308. The software code 308 may for example allow to perform one or more operations of the communication device. The software code 308 may be stored in the ROM 302a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 304. The communication device 300 may optionally have a user interface such as key pad 305, touch sensitive screen or pad, combinations thereof or the like. Optionally one or more of a display, a speaker and a microphone may be provided depending on the type of communication device.

It is understood that references in the above to various network functions (e.g., to an AMF, an SMF, TNF etc.) may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

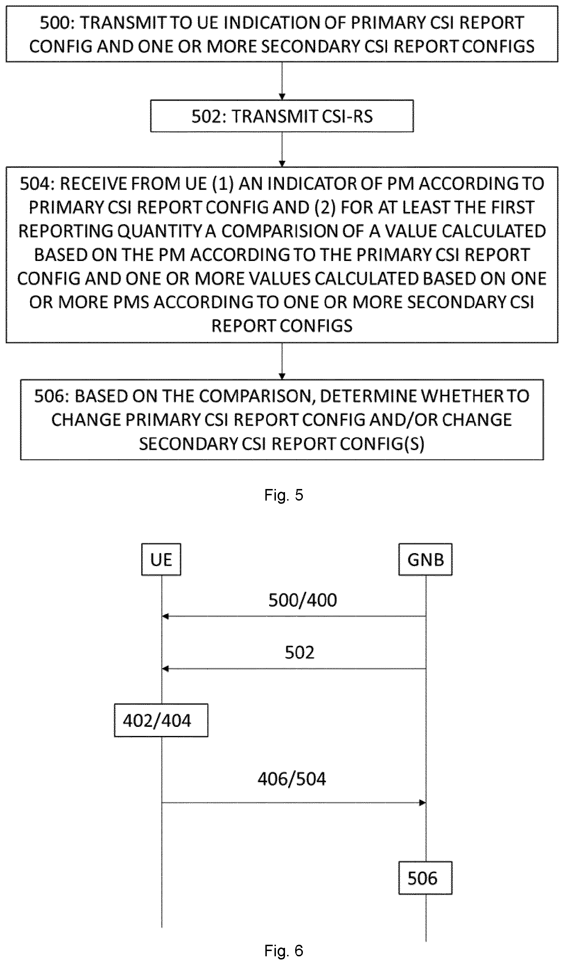

Figures 4 and 5 show a representation of operations at a user equipment (UE) and a gNB according to some example embodiments; and Figure 6 shows a representation of combined operations at the UE and gNB according to some example embodiments.

gNB sends (OPERATION 500) to UE a message indicating a primary Channel State Information (CSI) Report configuration (including, for example, a codebook configuration according to which UE is to determine a precoding matrix based on measurements of reference signals transmitted by gNB, and provide a set of indicators of the determined precoding matrix to gNB, based for example on a codebook, as part of a channel state information (CSI) report. The CSI report configuration includes not only configuration of the codebook itself but other parameters like additional rank restrictions, CSI update periodicities, and reporting modes like subband and/or wideband reporting schemes for the different reporting quantities like PMI and CQI. The message additionally indicates one or more secondary CSI report config according to which UE is to also determine a precoding matrix based on the same reference signal measurements, in order to perform calculations providing a comparison with the primary CSI report config for at least one reporting quantity, such as e.g. channel quality information (CQI), or a rank indicator (RI). Other types of metrics or statistics that can be included into the comparison and also become auxiliary reporting quantities, for example, a LOS/NLOS flag, single beam/multi-beam flag, number of beams or delay taps detected over a threshold, number of non-zero coefficients detected.

gNB also transmits the above-mentioned CSI reference signals (OPERATION 502).

UE receives (OPERATION 400) the message indicating the primary and secondary CSI report configs. UE makes measurements of the CSI-RS transmitted by gNB (OPERATION 402). Based on measurements of the CSI-RS, UE calculates an unquantised Eigenvector precoding matrix (PM) (referred to below as the ideal PM), and calculates values for one or more reporting quantities based on the unquantised Eigenvector PM. Based on the ideal PM, UE also determines a quantised PM according to the primary CSI report config indicated by gNB, and calculates values for the one or more reporting quantities based on the determined quantised PM according to the first CSI report config. From the same ideal PM, UE determines one or more quantised PMs according to one or more secondary CSI report configs, and UE calculates values for the one or more reporting quantities based on the one or more quantised PMs according to the one or more secondary CSI report configs(OPERATION 404).

Specific examples of CSI report configs are discussed further below.

Calculation of reporting quantity values for the primary and secondary CSI report configs may comprise nested calculations as discussed further below.

Based on the calculations, UE prepares a report for gNB. The report includes a PMI composed by a set of indicators, indicating the determined PM according to the primary CSI report config. The report does not include PMIs indicating the determined PMs according to the secondary CSI report configs, but the report does include other information indicating a comparison between the primary CSI report config and the one or more secondary CSI report configs, with respect to one or more reporting quantities.

Table 1 below shows some examples of coding for providing this comparison information in the report.

| Features | Coding options | Ideal CSI | eType II SD-FD cp (main config) | Type II SD cp L=4 / SB | Type I SD cp L=1 / SB |
|---|---|---|---|---|---|
| CQI metrics | **Absolute coding** | 30dB | 28dB | 26d8 | 23dB |
| | Coding w.r ideal CSI | 30dB | -2dB | -4dB | -7dB |
| | Coding w.r to main config | +2dB | 28dB | -2dB | -5dB |
| | Nested coding | 30d8 | -2dB | -2dB | -3dS |
| Rank metrics | Absolute coding | 4 | 3 | 2 | 2 |
| | Coding w.r. ideal CSI | 4 | -1 | -2 | -2 |
| | Coding w.r to main config | +1 | 3 | -1 | -1 |
| | Nested coding | 4 | -1 | -1 | 0 |
| Number of beams over a threshold | **Absolute coding** | 6 | 4 | 4 | 1 |
| | Coding w.r to ideal CSI | 6 | -2 | -2 | -5 |
| | Coding w.r to main config | +2 | 4 | 0 | -3 |
| | Nested coding | 6 | -2 | 0 | -3 |

Table 1 shows three reporting quantities namely CQI metrics, rank metrics and number of beams over threshold, but the report may comprise comparison information for more or less reporting quantities. By way of example only, Table 1 refers to three specific CSI report configs that are discussed in more detail below.

According to one coding option referred to as absolute coding, the report indicates absolute values for the ideal PM and for each of the determined quantised PMs according to each of the primary and secondary CSI report configs.

According to another option, the report indicates for each of the determined quantised PMs (according to the primary and secondary CSI report configs) an offset value relative to the value calculated for the ideal PM (i.e., Ideal CSI in Table 1)

According to another option, the report indicates for the ideal PM and for each of the determined quantised PMs according to the secondary CSI report config an offset value relative to the value calculated for the determined quantised PM according to the primary CSI report config. In the example of Table 1, the primary CSI report config corresponds to Rel 16. eType II with spatial domain (SD) and frequency domain (FD) compression.

According to another option, the report indicates an absolute value for the PM first in the reporting sequence, and indicates for each PM later in the reporting sequence an offset value relative to the PM directly preceding in the sequence. The sequence may be determined by the order in which the PM are calculated based on the different CSI report configs, for instance if the different codebook calculations are nested based on the degree of CSI resolution or computation complexity. For instance, in the example of Table 1, the sequence goes from best to lowest resolution namely, Ideal PM (Ideal CSI), then Rel 16. eType II with spatial domain (SD) and frequency domain (FD), then Rel 15. Type II with spatial domain (SD) domain compression only with L=4 beams, and finally, Rel 15 Type I with single beam (L=1) per subband.

gNB receives the CSI report from UE (OPERATION 504). Based on the comparison information included in the CSI report, the gNB may determine whether to continue with the same CSI report config for the primary CSI report config, or whether to switch to a different CSI report config (such as e.g. one of the secondary CSI report configs with a different codebook configuration for which the UE report provides comparison information). Additionally or alternatively, gNB may determine whether to adopt one or more different CSI report configs for the one or more secondary CSI report configs for which comparison information is to be provided by UE.

The comparison information may, for example, be provided in the form of a vector.

The provision of reporting quantities as a result of comparison in the report of information also are facilitated by having information of the ideal PM and by performing nested calculations as discussed further below.

If the comparison information happens to indicate that the ideal PM outperforms by a large margin all of the determined quantised PMs (according to the primary and secondary CSI report configs) included in the report, this may be an indication to gNB that another CSI report config (with even higher quantisation PM) than any of the CSI report configs for which comparison information is included in the report should be adopted as the primary CSI report config for UE, or tested as a secondary CSI report config for UE.

If the comparison information happens to indicate that one or more of the determined quantised PMs according to the one or more secondary CSI report configs provides similar performance to the determined quantised PM according to the primary CSI report config and uses less resources (e.g., bit overhead, computational resources) than the determined quantised PM according to the primary CSI report config, this may be an indication to gNB to adopt one of those secondary CSI report configs as a new primary CSI report config for the UE.

The differential offset (gain or loss) with respect to a reference can be expressed as an actual difference in dB or a normalized value between 0 and 1.

According to another example, the comparison information simply indicates in a binary manner a comparison with respect to a reference PM (e.g. ideal PM or determined quantised PM according to primary CSI report config). For example: one of two binary values may indicate a gain relative to the reference PM, and the other of the two binary values may indicate no gain relative to the reference PM.

According to another example: one of two binary values may indicate a gain above a predetermined threshold relative to the reference PM, and the other of the two binary values may indicate no gain above the predetermined threshold, relative to the reference PM. This latter example can facilitate avoiding CSI report config switches that do not yield a significant change in performance.

According to another example, calculated values are classified into groups, and the comparison information comprises an indication of the groups to which each of the PMs (ideal PM and determined PMs according to the primary and secondary CSI report configs) belongs. According to this example, the report makes no distinction in performance between PMs having similar values for a reporting quantity and falling on the range of a given group, and the reporting can be simplified.

The example in Table 1 above of a comparison between PMs for channel quality information (CQI), rank indicator (RI) and number of beams over threshold, may indicate to gNB that Rel 16 eType II with L=4 beams and frequency compression CB may yield better performance than Rel 15 Type II (only space compression with L=4 beams), and an even better performance than Rel 15 Type I mode 2 (L=1 beam). The significant difference between the values for the ideal PM and the determined quantised PM according to the primary CSI report config may direct gNB to switch to an even higher resolution CSI report config for the primary CSI report config for UE (e.g., such as an AI/ML (artificial intelligence/machine learning) based codebook or other more sophisticated codebook).

On the other hand, another report might indicate to gNB that the determined quantised PM according to the current primary CSI report config does not provide sufficiently better performance than a lower resolution PM according to another CSI report config, and such other report may direct gNB to switch to a new primary CSI report config for which the PM has a lower resolution.

As mentioned above, the combination of reporting quantities shown in Table 1 is a non-limiting example. The report may include comparison information for other reporting quantities such as e.g.: number of beams or delay taps exceeding an amplitude threshold; number of non-zero coefficients over a threshold; indicator of line-of-sight (LOS) or non-line-of-sight (NLOS); indicator of single beam or multi-beam.

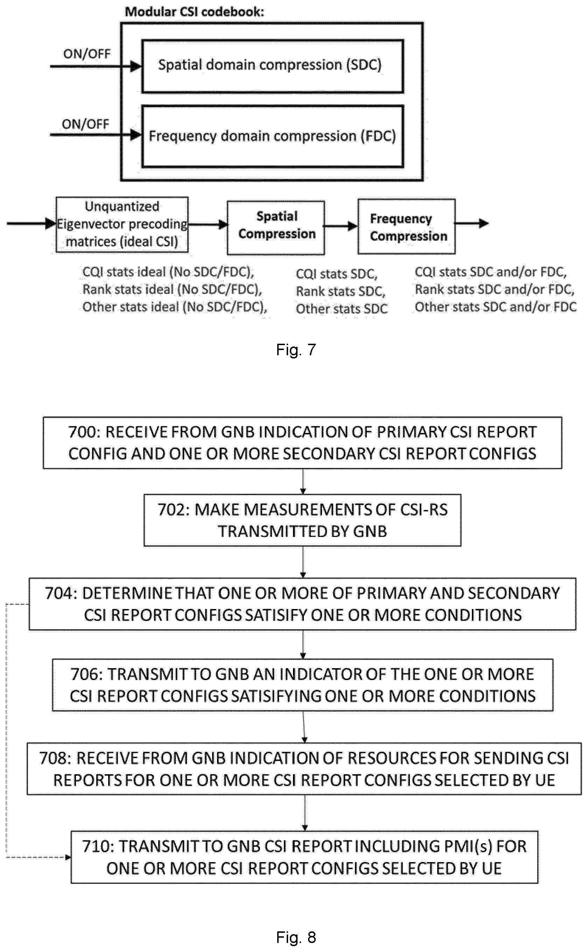

In the example described above, the primary and secondary CSI report configs each involve different codebook types. According to another example illustrated by Fig. 7, two or more of the primary and secondary CSI report configs may involve the same codebook type but with different parametrisation regarding, for example, different quantisation resolution, different number of beams and/or number of delay taps and/or different number of reported CSI coefficients. Also different features may be activated or deactivated. For example, a codebook type may allow for activation/deactivation of space compression and/or frequency compression. One of the primary and secondary CSI report configs may comprise the codebook type with activation of both space compression and frequency compression, and another one of the primary and secondary CSI report configs may comprise the same codebook type with a given combination of activation/deactivation for the space and frequency compression. Such comparison information may serve to indicate to gNB the contribution to the overall performance of each optional feature of the codebook type, and the UE report may thus direct gNB to activate or deactivate the optional features for which the UE report provides comparison information.

In the embodiments described above, the UE provides gNB with an indication of a determined quantised PM according to the primary CSI report config indicated by gNB, and the gNB determines whether to adopt a different CSI report config for UE based on the comparison information provided by UE to gNB. According to some other embodiments described below and illustrated by Fig.s 8 to 10, UE may (additionally or alternatively) provide gNB with an indication of one of more determined quantised PMs according to one or more CSI report configs other than the primary CSI report configuration indicated by gNB.

With reference to Fig.s 8 to 10, gNB transmits to UE a message indicating a primary CSI report config and one or more secondary CSI report configs (OPERATION 800), and transmits CSI-RS (OPERATION 802). UE receives the message from gNB (OPERATION 700) and measures the CSI reference signals transmitted by gNB (OPERATION 702).

UE performs calculations based on the CSI-RS measurements, and determines that one or more quantised PMs according to one or more of the primary and secondary CSI report configs satisfy one or more conditions (OPERATION 704). This operation may be implemented in different ways.

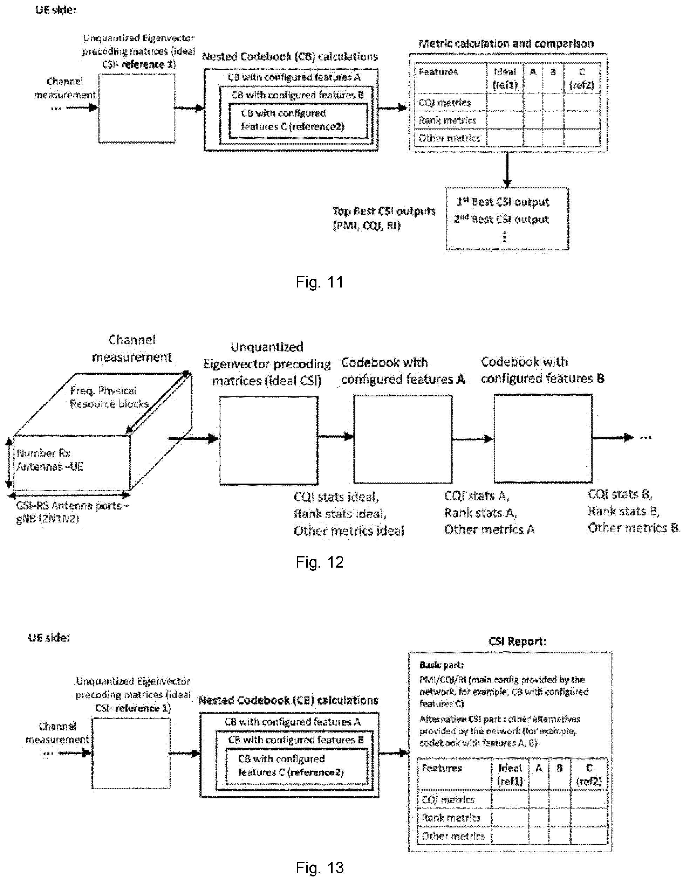

According to one example illustrated by Fig. 11: UE determines quantised PMs according to the primary and secondary CB configs; calculates values based on each of the determined quantised PMs for at least one quantity; and based on the calculated values selects one or more of the determined quantised PMs (i.e. selects one or more the primary and secondary CSI report configs) according to one or more predefined rules. For example, the predefined rules for selecting one or more determined quantised PMs may comprise a rule that UE selects the determined quantised PM (CSI report config) that gives the best calculated value(s) among the plurality of PMs (CSI report configs) for which calculations were performed by the UE based on the CSI-RS measurements. More generally, UE may select n PMs (n CSI report configs) that give the best calculated values among the plurality of PMs (CSI report configs) for which calculations were performed by the UE, wherein n is e.g. one or a higher integer. The size of n may be set by the gNB during initial configuration of the UE by gNB.

According to another example, UE determines a quantised PM according to one of the primary and secondary CSI report configs, calculates one or more values for one or more quantities based on the determined quantised PM, and determines whether the calculated one or more values meet one or more conditions (e.g. based on pre-defined threshold values). The one or more conditions (e.g. target performance/accuracy metrics) may be provided by the gNB during initial configuration of the UE by gNB. If UE determines that the one or more calculated values do meet the one or more conditions, UE determines to indicate the quantised PM (CSI report config) to gNB. If the one or more calculated values do not meet the one or more conditions (or if UE is configured to indicate to gNB all of the primary and secondary CSI report configs that meet the one or more conditions), UE repeats this testing procedure for the next CSI report config in the testing sequence. A number of one or quantised PMs which meet the condition, could be selected and indicated to the gNB as a result. Alternatively, UE may start the testing at a relatively low resolution quantised PM according to one of the primary and secondary CSI report configs, and sequentially test quantised PMs of increasing resolution according to others of the primary and secondary CSI report configs, until UE arrives at a CSI report config meeting the one or more conditions for selecting a PM to indicate to gNB. Other testing sequence orders may also be adopted. According to another example related to CSI resolution, UE may start by testing a single beam CSI report config, and sequentially test CSI report configs with increasing number of beams, until UE arrives at a CSI report config meeting the one or more conditions for selecting a PM to indicate to gNB. Similarly, this type of sweeping process could be done on the basis of parameters other than number of beams, such as quantisation scheme, sub-band configurations and delay tap selection configuration. Notice also that sweeping may be in also done in any direction, from low to high CSI resolution and vice versa. The adoption of nested calculations discussed further below also facilitates the above-mentioned processes of selecting one or more CSI report configs at UE.

In the event that UE is to send CSI information to gNB for two or more CSI report configs and the CSI information for the two or more CSI report configs have some commonality, radio resource overhead for reporting may be saved by indicating the commonality. For example, the reporting may indicate that the two or more CSI report configs share the same beam indexes, delay tap indexes, or rank indicator, and may indicate differences in other quantities (such as e.g. CQI) using differential values with respect to a reference.

It may be that the one or more CSI report configs selected for reporting to gNB do not include the CSI report config indicated by the gNB as primary CSI report config or include one or more CSI report configs in addition to the CSI report config indicated by the gNB as primary CSI report config, coming from the secondary CSI report configs. UE may then transmit a message providing advance notification to gNB of the one or more CSI report configs for which UE will send a CSI report including PMI (OPERATION 706). In response to receiving such message (OPERATION 804), gNB transmits an acknowledgment message indicating re-scheduled UL resources for UE to send the CSI reports(s) for the one or more selected CSI report configs (OPERATION 806). In response to receiving this acknowledgment message (OPERATION 708), UE sends the CSI report(s) to gNB (OPERATION 710) and gNB receives the CSI report(s) (OPERATION 808). If the UE selects the primary CSI report config and no other CSI report configs (and no re-scheduling is thus needed for sending the CSI report), UE proceeds directly to sending the CSI report, as illustrated by the dashed arrows in Fig.s 8 and 9.

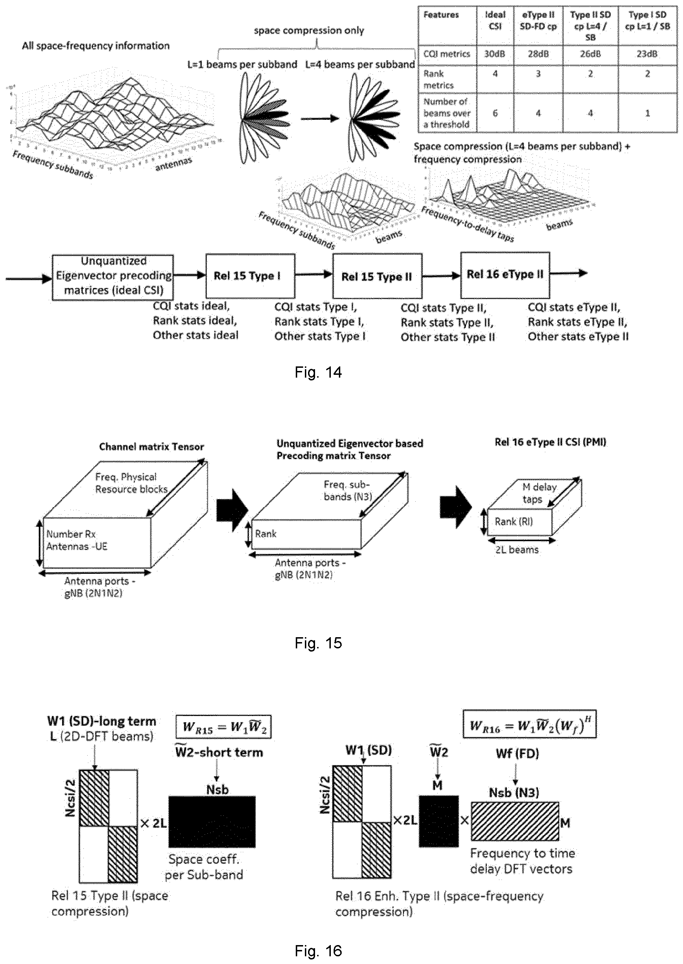

The above-mentioned processes may be facilitated by doing the above-mentioned calculations in nested stages. For example, reporting quantity values for a plurality of CSI report configs may be calculated in stages starting from calculating reporting quantity values for the ideal PM. Fig 12 shows a representation of such a nested calculation technique. As mentioned above, the reporting quantity values calculated for the ideal PM may also be included in the information provided by UE to gNB. Fig. 13 shows a representation of an example of codebook nesting, and how CSI metrics obtained from nested codebook (CB) calculations may be reported for a primary CSI report config (CB with configured features C) and secondary CSI report configs (CBs with configured features A and B). Fig. 14 shows a representation of nested CSI codebook output calculation and CQI/RI format for secondary CSI report configs, for the example shown in Table 1 above.

According to one example, the calculations for a plurality of CSI report configs may start at the lowest resolution CSI report config to be tested, and then continue with CSI report configs of increasingly high resolution. This order may be reversed, depending on convenience of calculation and/or characteristics of the information to be provided to gNB.

Hereunder follows an explanation of how channel state information for a CSI report config may be compressed, using as reference example the 3GPP Type II codebook. For the purpose of simplifying the explanation, focus is placed on the space-frequency CSI compression process. The channel can be represented by an explicit channel tensor defined in 3 dimensions: (i) the space component represented by $NTx$ antenna ports in the gNB; (ii) the frequency component defined by a bandwidth composed by a number of Physical resource blocks (PRB), and (iii) all of the $NRx$ receiver antennas in the UE with their respective space-frequency measurements. The UE provides an indicator (PMI) of the associated precoding matrices required for the corresponding space-frequency beamforming. The channel state information for the precoding matrices is initially obtained from singular value decomposition (SVD) or Eigenvalue decomposition (EVD) applied on the channel or associated channel correlation matrices. The precoding matrices are defined by transmission streams to the UE with a chosen rank. For the space component, there is a total of $Ncsi = 2N1N2$ CSI ports, $Ncsi \leq NTx$. $N1$ and $N2$ represents the number of CSI ports columns and rows which define the horizontal and vertical domains of the 2D CSI antenna port structure and the coefficient "2" reflects that 2 antenna polarizations are considered (typically for MIMO arrays $\pm45°$ slant); N3 (also sometimes noted as $Nsb$) represents a number of sub-bands in frequency composed by a number of averaged PRBs in each. Each sub-band has an associated spatial precoding vector with size 2N1N2 for each rank layer; After compression, as shown in Fig. 15, the resulting CSI report is composed by a smaller structure with a set of coefficients defined by $2L$ beam projections and M delay taps for each beam projection in each rank layer. A CSI structure represented in Beam-Time delay domain exploits the sparse characteristics of the channel/precoding matrix after the corresponding transformations with the respective codebooks for each domain. The codebooks used to enable decomposition of the raw CSI information obtained from the eigenvector-based precoding matrices into a reduced set of Fourier projections and then determination of the main components in beam and/or delay domains. The set of projection coefficients in a quantised form, any related reference CSI values, and indexes of selected components coming from one or more reference codebooks may be referred to as precoding matrix indicators (PMI). The CSI report may contain not only the PMI information but also: the information of the precoding matrix attainable rank in the form of a rank indicator (RI); a set of one or more channel quality indicators (CQI) to provide information about the quality of the transmission channel for the respective UE, which is based on the estimation of the signal-to-noise ratio (SNR) on the effective (beamformed) channel.

Fig. 16 shows a representation of the structure of Release 15 Type II and Release 16 enhanced Type II codebook. Due to the larger CSI accuracy, Type II may be employed for MU-MIMO applications, because a more reliable CSI is very useful for interference cancellation during scheduling. One significant difference between the 3GPP Release 15 and 16 Type II, is that 3GPP Release 15 Type II only has the capability of space compression in 2L beam projections for all averaged subbands, whereas 3GPP Release 16 enhanced Type II codebook includes the frequency compression and the CSI representation could be further reduced to a smaller number of delay taps for each rank layer. The beam compression is performed by selecting a number of common $L$ DFT wideband beams for both polarizations and all rank layers, represented by a matrix $W_1$. The matrix $W_1$ has a block diagonal structure with size $2(N1N2 \times L)$ complex coefficients obtained from a larger 2D-DFT oversampled codebook with oversampling coefficients $O1$ and $O2$. The unquantised eigenvector-based precoding matrices may be represented by a set of beam projections coefficients $\tilde{W}_2$. For 3GPP Release 15 Type II, the size of $\tilde{W}_2$ corresponds to $2L \times Nsb$ complex coefficients. The full expression which represents the linear combination approximation for the precoding matrices of the 3GPP Release 15 Type II (i.e., $W_{R15}$) is given by $W_{R15} = W_1 \tilde{W}_2$ for each rank layer. On the other hand, for 3GPP Release 16 enhanced Type II, the frequency information of the number of subbands can be further represented in a reduced number of taps by a multiplication by a second frequency codebook, in which the reduced number of $M$ taps is represented by $W_f$ with size $N3 \times M$ which contains the selected DFT codewords after the frequency transform. The space-frequency linear combination approximation for the precoding matrices of the Rel. 16 enhanced Type II (i.e. $W_{R16}$) is given by $W_{R16} = W_1 \tilde{W}_2 (W_f)^H$, where $(\cdot)^H$ represents the Hermitian of a matrix (i.e. transpose-conjugate of a complex matrix). One significant advantage of the space-frequency compression is the further reduction in the number of coefficients with respect to the space only compression from 3GPP Release 15 Type II. This allows several advantages for 3GPP Release 16 enhanced Type II over 3GPP Release 15 Type II, including the following. 1) Due to bit overhead constraints, 3GPP Release 15 Type II has a relatively rough quantisation based on firstly, a quantisation of wideband coefficients and then, 1-bit quantisation for amplitude of each subband. In that aspect, 3GPP Release 16 enhanced Type II (because it has less reported coefficients) can afford a better quantisation of amplitude and phase of beam-delay coefficients. 2) Despite of having relatively rough quantisation, 3GPP Release 15 Type II has a large bit overhead budget and may only report up to rank 2. In contrast, 3GPP Release 16 enhanced Type II can report up to rank 4 supported on the sparsity of the coefficients which gives as a result a quite moderate overall bit overhead.

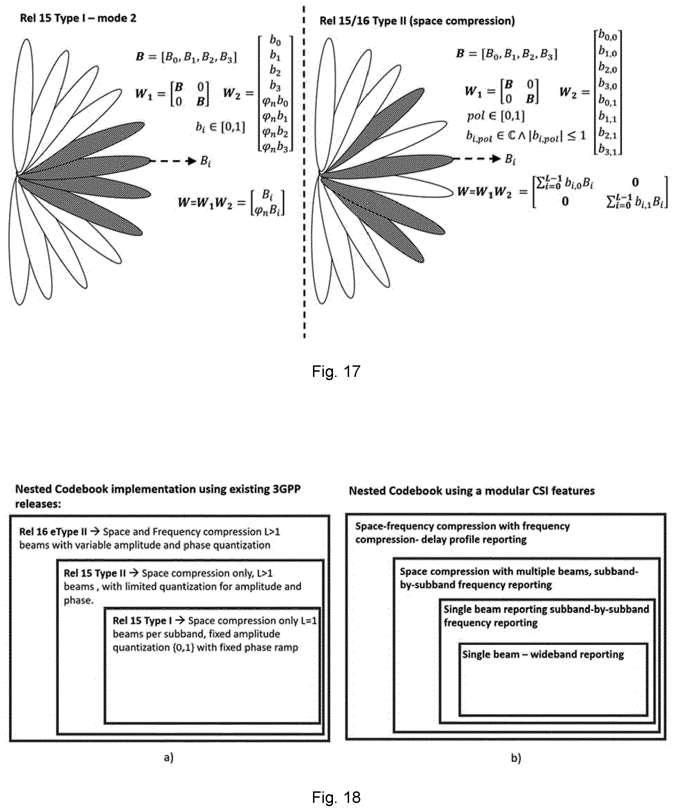

On the other hand, the 3GPP Release 15 Type I precoder has a simpler design but less CSI accuracy, and may be more suited to SU-MIMO applications, in which interference may be a less critical issue. The concept of 3GPP Release 15 Type I precoder is an extension of the legacy LTE codebooks, in which a single DFT beam with fixed amplitude and a cross-polarization coefficient (also called co-phasing between the 2 polarizations) are sufficient to represent the PMI. Similarly to Type II, the codebook for space may have a 2D configuration with $N1$ and $N2$ values. Moreover, there are two modes, namely mode 1 and mode 2. In mode 1, only 1 beam can be used, i.e. L=1, for the whole frequency band. On the other hand, in mode 2, a set of L=4 beams is selected from a group of beams, and the beam selection per subband can be done by selecting only one of those L=4 beams. Fig. 17 shows a comparison of the beam selection mechanisms of the Type I and Type II codebooks. On the left-hand side of Fig. 17, for 3GPP Release 15 Type I mode 2, it may be observed that the precoder W is composed by a single beam $B_i$ out of a set $B$, which corresponds to the long-term component $W_1$. In this case, $W_2$, which is the short-term component, acts as selector to pick the same $B_i$ for both polarizations with a QPSK co-phasing coefficient given by $\varphi_n$. It is thus clear that although $W_1$ contains $L = 4$ beams for mode 2, only a single beam is selected at a time for each $W = W_1 W_2$ associated to each subband. On the other hand, for 3GPP Release 15/16 Type II, it can be seen that we have also the structure $W = W_1 W_2$. However $W_2$ in this case is composed by complex coefficients given by $b_{i,pol} \in \mathbb{C} \wedge |b_{i,pol}| \leq 1$ . The result is that the precoder $W = [W_{pol=0} , W_{pol=1}]^T$ is defined by linear combinations, in which each polarization of the precoder matrix is given as $W_{pol} = \sum_{i=0}^{L-1} b_{i,pol} B_i$ with $pol \in [0,1]$ and $L = 4$. In this case, it may be easily understood that despite some appearance of being two different schemes, Type I and Type II keep some CSI configuration parameters in common, but with different restrictions, and that mathematically in essence are the same. The only major difference is the structure of $W_1$ and $W_2$. For instance, it may be noticed that for 3GPP Release 15 Type I mode 2 the coefficients of $b_i \in [0,1]$, which is just a special case contained by the more general expression $b_{i,pol} \in \mathbb{C} \wedge |b_{i,pol}| \leq 1$ from the Type II definition, which allows more variable amplitude and phase values definition, because of a more granular quantisation.

More generally, different codebooks may be related to each other and some codebooks may be special cases of the most sophisticated codebooks, or there may be some degree of commonality. Fig.s 18(a) and (b) show how codebook implementations might be nested in order of complexity and the level of comprehensiveness. This use of nested codebook configurations facilitates the calculation of CSI reports for several CSI report configs, and a comparison thereof.

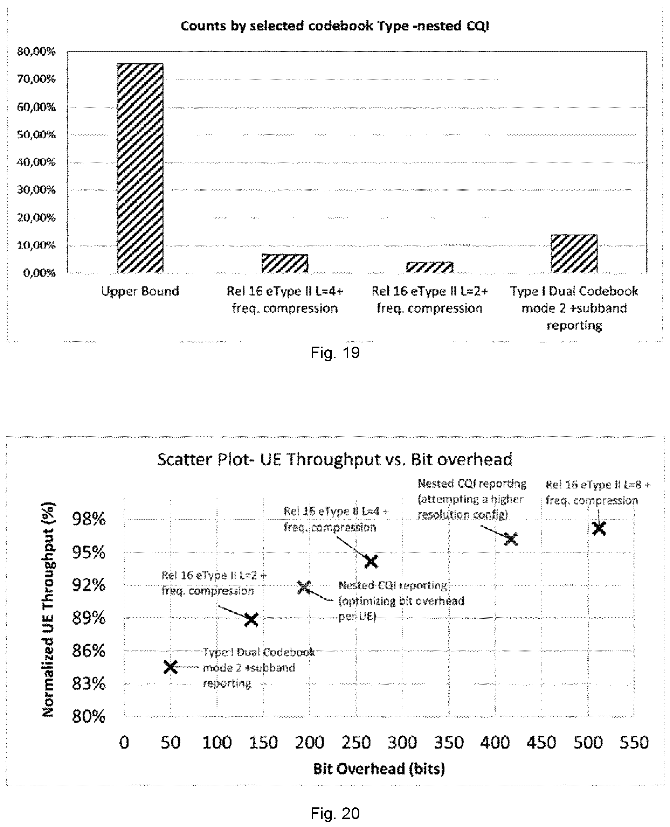

Fig. 19 shows results from a simulation with 7x3 cells and 210 UEs uniformly distributed. Each BS has 16 Tx antennas and each UE has 4Rx antennas. Simulations are carried out for 3km/h and rank restricted to rank 1 for MU-MIMO. The tested CSI alternatives consist of reporting aggregated metrics for Ideal CSI (upper bound), Release 16 eType II with L=4 and L=2 with frequency compression reporting (i.e., delay taps reporting) and Release 15 Type I Dual Codebook mode 2 with per frequency subband reporting. As seen in Fig. 19, 75% of the UEs report higher CQI with ideal CSI, which is just measured after the unquantised eigenvector precoding matrices have been calculated (upper bound-ideal CSI). This indicates that a better configuration might be used to increase performance for these UEs. At the same time, some UEs (about 18%) report that they might be able to use lower resolution configurations like Release 16 eType II with L=2 or even Release 15 Type I mode 2 with adequate CQI statistics. This is very beneficial for these UEs which may optimize the bit overhead and computational resource usage.

Fig. 20 shows the resulting normalized mean UE throughput for the different alternative configurations tested. If the network follows the statistics provided by the 75% UEs that indicate that a higher resolution might be attempted, some UEs might upgrade to a hypothetical case Release 16 eType II with L=8. This case does not exist in the standard, and is just an illustration of an example of a possible higher resolution codebook configuration. Another example of high resolution codebook might be, for instance, an AI/ML implementation. Evaluating the throughput gain depends on the assumed initial main UE configuration. If UEs are reconfigured with the above-mentioned higher resolution codebook configuration, the normalized mean UE throughput increases only by 2% with respect to Release 16 eType II L=4 with a bit overhead increase from 266 bits to 417 bits in average. This reconfiguration may entail an additional cost as the UEs with the upgraded configuration may have an increased computational burden to compute CSI. This reconfiguration may have little advantage if the main CSI configuration is Release 16 eType II with L=4, since such main CSI configuration already starts close to the performance of the highest resolution configuration. However, if all UEs were initially configured with the lowest resolution CSI alternative, i.e., Release 15 Type I, then, by following the strategy of increasing throughput based on nested CQI statistics, the increase of performance would be up to 12%. This would come at a cost of increasing bit overhead. It may be seen that the overall throughput may be maximised with 22% less bit overhead (512 vs. 417 bits) with respect to the highest resolution configuration. It may be noted that, in all cases, this 18% of UEs which have decided to configure the CSI settings with Release 16 eType II with L=2 or Release 15 Type I play a big role on the optimized statistics.

Alternatively, the network might try to optimize by reducing the bit overhead from Release 16 eType II L=4 with 266 bit to 193 bits resulting on 28% bit overhead reduction with only 2% degradation. This example, this change may come after a reassessment in which further tests on higher resolution CSI alternatives (i.e., Rel 16 eType II L=8) prove that there is not a better performance with these configurations, and a decision to eliminate such higher resolution CSI options from the alternatives. In order to make better decisions, other auxiliary metrics may be included. For instance, detecting UEs with reported CSI which presents a low number of beams exceeding a threshold floor (i.e., by just counting these beams or associated space-frequency non-zero coefficients) would indicate that increasing the value of L is not the way to increase performance. The, the further alternative CSIs to be tested might have the value of L fixed to 4, but other parameters might be increased instead, such as e.g. frequency subband granularity or reported delay taps.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(iii) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

**Claims**

1. Apparatus comprising means for:

    receiving from a transmitting device an indication of a primary channel state information report configuration and a secondary channel state information report configuration; and
    transmitting to the transmitting device a report indicating one or more channel state information reporting quantity values according to the primary channel state information report configuration, and indicating one or more channel state information reporting quantity values according to the secondary channel state information report configuration.

2. The apparatus according to claim 1, further comprising means for:

    performing channel state information reporting quantity value calculation based on the primary and secondary channel state information report configurations; and
    sorting the channel state information calculation from low resolution to high resolution, or from high resolution to low resolution.

3. The apparatus according to claim 1, comprising means for:

calculating one or more metrics, and from the one or more metrics calculating the one or more reporting quantity values according to the primary and secondary channel state information report configurations.

4.  The apparatus according to any of claims 1 to 3, wherein the apparatus is a user equipment and the transmitting device is a network access node.

5.  Apparatus comprising means for:

    transmitting to a receiving device an indication of a primary channel state information report configuration and a secondary channel state information report configuration; and
    receiving from the receiving device a report indicating one or more channel state information reporting quantity values according to the primary channel state information report configuration, and indicating one or more channel state information reporting quantity values according to the secondary channel state information report configuration.

6.  The apparatus according to claim 5, comprising means for:
    based at least partly on the report, determining one or more of: whether to continue with the primary channel state information report configuration for the receiving device, or whether to continue with the secondary channel state information report configuration for the receiving device.

7.  The apparatus according to claim 5 or claim 6, wherein the apparatus is an access network node, and the receiving device is a user equipment.

8.  The apparatus according to any of claims 1 to 7, wherein the channel state information reporting quantity values according to the primary and secondary channel state information report configurations comprise absolute reporting quantity values.

9.  The apparatus according to any of claims 1 to 7, wherein the one or more channel state information reporting quantity values according to the secondary channel state information report configuration comprise one or more offsets relative to one or more reference values.

10. The apparatus according to claim 9, wherein the one or more reference reporting quantity values comprise one or more of: the reporting quantity value according to the primary channel state information report configuration; a reporting quantity value according to another channel state information report configuration; a metric from which the reporting quantity values according to the primary and secondary channel state information report configurations were calculated; a reporting quantity value according to a channel state information report configuration with the highest resolution among the primary and secondary channel state information report configurations; a reporting quantity value according to a channel state information report configuration with the lowest resolution among the primary and secondary channel state information report configurations.

11. The apparatus according to claim 9, wherein the report indicates a comparison between a plurality of channel information state report configurations comprising the primary and secondary channel state information report configurations; and wherein the reference reporting quantity value comprises the lowest reporting quantity value among the primary and secondary channel state information report configurations, or the highest reporting quantity value among the primary and secondary channel state information report configurations.

12. The apparatus according to any of claims 1 to 7, wherein the report indicates a comparison between a sequence of channel state information report configurations comprising the primary and secondary channel state information report configurations; and the report indicates an offset between the reporting quantity value according to a primary or secondary channel state information report configuration and a reporting quantity value for the one of the plurality of channel state information report configurations preceding the primary or secondary channel state information report configuration in the sequence.

13. The apparatus according to any of claims 1 to 7, wherein the report indicates one of two values indicating loss and gain of the secondary channel state information report configuration relative to the primary channel state information report configuration or a given reference channel state information report configuration.

14. The apparatus according to any preceding claim, wherein the one or more reporting quantities for which the report provides values according to the primary and secondary channel state information report configurations comprise one or more of: channel quality information indicators; rank indicators; number of beams detected over a threshold; number of delay taps detected over a threshold; number of non-zero coefficients detected; line-of-sight/non-line-of-sight flag; single beam/multi-beam flag.

15. A method comprising:

receiving from a transmitting device an indication of a primary channel state information report configuration and a secondary channel state information report configuration; and

transmitting to the transmitting device a report indicating one or more channel state information reporting quantity values according to the primary channel state information report configuration, and indicating one or more channel state information reporting quantity values according to the secondary channel state information report configuration.

5GC

Fig. 1

Fig. 2

307 306

300

305

303

301

304

302

308

302a

302b

Fig. 3

400: RECEIVE FROM GNB INDICATION OF PRIMARY CSI REPORT CONFIG AND ONE OR MORE SECONDARY CSI REPORT CONFIGS

402: MAKE MEASUREMENTS OF CSI-RS TRANSMITTED BY GNB

404: BASED ON MEASUREMENTS DETERMINE PM ACCORDING TO PRIMARY CSI REPORT CONFIG AND DETERMINE PM(S) ACCORDING TO ONE OR MORE SECONDARY CSI REPORT CONFIG(S), AND FOR AT LEAST A FIRST CSI REPORTING QUANTITY, CALCULATE VALUE BASED ON PM ACCORDING TO PRIMARY CSI REPORT CONFIG AND CALCULATE VALUE(S) BASED ON PM(S) ACCORDING TO SECONDARY CSI REPORT CONFIG(S)

406: TRANSMIT TO GNB (1) AN INDICATOR OF DETERMINED PM ACCORDING TO PRIMARY CSI REPORT CONFIG AND (2) FOR AT LEAST THE FIRST REPORTING QUANTITY A COMPARISION OF THE VALUES CALCULATED BASED ON THE PMs ACCORDING TO THE PRIMARY AND SECONDARY CSI REPORT CONFIGS

Fig. 4

500: TRANSMIT TO UE INDICATION OF PRIMARY CSI REPORT CONFIG AND ONE OR MORE SECONDARY CSI REPORT CONFIGS

502: TRANSMIT CSI-RS

504: RECEIVE FROM UE (1) AN INDICATOR OF PM ACCORDING TO PRIMARY CSI REPORT CONFIG AND (2) FOR AT LEAST THE FIRST REPORTING QUANTITY A COMPARISION OF A VALUE CALCULATED BASED ON THE PM ACCORDING TO THE PRIMARY CSI REPORT CONFIG AND ONE OR MORE VALUES CALCULATED BASED ON ONE OR MORE PMS ACCORDING TO ONE OR MORE SECONDARY CSI REPORT CONFIGS

506: BASED ON THE COMPARISON, DETERMINE WHETHER TO CHANGE PRIMARY CSI REPORT CONFIG AND/OR CHANGE SECONDARY CSI REPORT CONFIG(S)

Fig. 5

UE          GNB

500/400

502

402/404

406/504

506

Fig. 6

**Modular CSI codebook:**

ON/OFF → Spatial domain compression (SDC)

ON/OFF → Frequency domain compression (FDC)

→ Unquantized Eigenvector precoding matrices (ideal CSI) → **Spatial Compression** → **Frequency Compression** →

CQI stats ideal (No SDC/FDC),
Rank stats ideal (No SDC/FDC),
Other stats ideal (No SDC/FDC),

CQI stats SDC,
Rank stats SDC,
Other stats SDC

CQI stats SDC and/or FDC,
Rank stats SDC and/or FDC,
Other stats SDC and/or FDC

Fig. 7

700: RECEIVE FROM GNB INDICATION OF PRIMARY CSI REPORT CONFIG AND ONE OR MORE SECONDARY CSI REPORT CONFIGS

702: MAKE MEASUREMENTS OF CSI-RS TRANSMITTED BY GNB

704: DETERMINE THAT ONE OR MORE OF PRIMARY AND SECONDARY CSI REPORT CONFIGS SATISIFY ONE OR MORE CONDITIONS

706: TRANSMIT TO GNB AN INDICATOR OF THE ONE OR MORE CSI REPORT CONFIGS SATISIFYING ONE OR MORE CONDITIONS

708: RECEIVE FROM GNB INDICATION OF RESOURCES FOR SENDING CSI REPORTS FOR ONE OR MORE CSI REPORT CONFIGS SELECTED BY UE

710: TRANSMIT TO GNB CSI REPORT INCLUDING PMI(s) FOR ONE OR MORE CSI REPORT CONFIGS SELECTED BY UE

Fig. 8

800: TRANSMIT TO UE INDICATION OF PRIMARY CSI REPORT CONFIG AND ONE OR MORE SECONDARY CSI REPORT CONFIGS

802: TRANSMIT CSI-RS

804: RECEIVE FROM UE AN INDICATION OF ONE OR MORE CSI REPORT CONFIGS SELECTED BY UE

806: TRANSMIT TO UE AN INDICATION OF RESOURCES FOR SENDING CSI REPORT FOR ONE OR MORE CSI REPORT CONFIGS SELECTED BY UE

808: RECEIVE FROM UE CSI REPORT INCLUDING PMI(S) FOR ONE OR MORE CSI REPORT CONFIGS SELECTED BY UE

Fig. 9

UE GNB

800/700

802

702/704

706/804

806/708

710/808

Fig. 10

**UE side:**

Channel measurement
...

Unquantized Eigenvector precoding matrices (ideal CSI- **reference 1**)

Nested Codebook (CB) calculations

CB with configured features A

CB with configured features B

CB with configured features C (**reference2**)

Metric calculation and comparison

| Features | Ideal (ref1) | A | B | C (ref2) |
|---|---|---|---|---|
| CQI metrics | | | | |
| Rank metrics | | | | |
| Other metrics | | | | |

Top Best CSI outputs (PMI, CQI, RI)

1st Best CSI output
2nd Best CSI output
⋮

Fig. 11

**Channel measurement**

Freq. Physical Resource blocks

Number Rx Antennas -UE

CSI-RS Antenna ports - gNB (2N1N2)

**Unquantized Eigenvector precoding matrices (ideal CSI)**

**Codebook with configured features A**

**Codebook with configured features B**

...

CQI stats ideal, Rank stats ideal, Other metrics ideal

CQI stats A, Rank stats A, Other metrics A

CQI stats B, Rank stats B, Other metrics B

Fig. 12

**UE side:**

Channel measurement
...

Unquantized Eigenvector precoding matrices (ideal CSI- **reference 1**)

Nested Codebook (CB) calculations

CB with configured features A

CB with configured features B

CB with configured features C (**reference2**)

**CSI Report:**

**Basic part:**
PMI/CQI/RI (main config provided by the network, for example, CB with configured features C)

**Alternative CSI part :** other alternatives provided by the network (for example, codebook with features A, B)

| Features | Ideal (ref1) | A | B | C (ref2) |
|---|---|---|---|---|
| CQI metrics | | | | |
| Rank metrics | | | | |
| Other metrics | | | | |

Fig. 13

| Features | Ideal CSI | eType II SD-FD cp | Type II SD cp L=4 / SB | Type I SD cp L=1 / SB |
|---|---|---|---|---|
| CQI metrics | 30dB | 28dB | 26dB | 23dB |
| Rank metrics | 4 | 3 | 2 | 2 |
| Number of beams over a threshold | 6 | 4 | 4 | 1 |

Fig. 14

Fig. 15

$$W_{R15} = W_1 \widetilde{W}_2$$

$$W_{R16} = W_1 \widetilde{W}_2 (W_f)^H$$

Fig. 16

Fig. 17

Fig. 18

**Counts by selected codebook Type -nested CQI**

Fig. 19

**Scatter Plot- UE Throughput vs. Bit overhead**

Fig. 20

Europäisches
Patentamt

European
Patent Office

Office européen
des brevets

# EUROPEAN SEARCH REPORT

**Application Number**

EP 24 15 6885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/087003 A1 (HAO CHENXI [CN] ET AL) 23 March 2023 (2023-03-23) <br> * paragraph [0104] * <br> * paragraph [0215] * <br> * claims 1,94 * | 1-15 | INV. <br> H04B7/0456 <br> H04B7/06 |
| X | US 2023/103697 A1 (KIM HYUNGTAE [KR] ET AL) 6 April 2023 (2023-04-06) <br> * claims 1,5,15,16 * | 1-15 | |
| X | US 2024/015557 A1 (KWAK YOUNGWOO [KR] ET AL) 11 January 2024 (2024-01-11) <br> * claims 1,4 * | 1-15 | |
| X | US 2014/241274 A1 (LEE HYOJIN [KR] ET AL) 28 August 2014 (2014-08-28) <br> * claims 1,2,9 * | 1-15 | |
| A | HUAWEI ET AL: "Considerations on two-level configuration of CSI acquisition settings", <br> 3GPP DRAFT; R1-1700057, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE <br> , <br> vol. RAN WG1, no. Spokane, USA; 20170116 - 20170120 <br> 16 January 2017 (2017-01-16), XP051207599, <br> Retrieved from the Internet: <br> URL:http://www.3gpp.org/ftp/Meetings_3GPP_SYNC/RAN1/Docs/ <br> [retrieved on 2017-01-16] <br> * the whole document * | 1-15 | TECHNICAL FIELDS SEARCHED (IPC) <br><br> H04B |

The present search report has been drawn up for all claims

| Place of search | Date of completion of the search | Examiner |
|---|---|---|
| Munich | 19 July 2024 | Schiffer, Andrea |

EPO FORM 1503 03.82 (P04C01)

## ANNEX TO THE EUROPEAN SEARCH REPORT
## ON EUROPEAN PATENT APPLICATION NO.

EP 24 15 6885

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | Publication date | Patent family member(s) | | Publication date |
|---|---|---|---|---|
| US 2023087003 A1 | 23-03-2023 | CN | 115053468 A | 13-09-2022 |
| | | EP | 4104305 A1 | 21-12-2022 |
| | | US | 2023087003 A1 | 23-03-2023 |
| | | WO | 2021159433 A1 | 19-08-2021 |
| US 2023103697 A1 | 06-04-2023 | US | 2023103697 A1 | 06-04-2023 |
| | | WO | 2021167348 A1 | 26-08-2021 |
| US 2024015557 A1 | 11-01-2024 | CN | 109716703 A | 03-05-2019 |
| | | EP | 3503453 A1 | 26-06-2019 |
| | | KR | 20180031167 A | 28-03-2018 |
| | | US | 2021282041 A1 | 09-09-2021 |
| | | US | 2024015557 A1 | 11-01-2024 |
| | | WO | 2018052258 A1 | 22-03-2018 |
| US 2014241274 A1 | 28-08-2014 | CN | 105052049 A | 11-11-2015 |
| | | CN | 110912589 A | 24-03-2020 |
| | | EP | 2773051 A2 | 03-09-2014 |
| | | JP | 6495187 B2 | 03-04-2019 |
| | | JP | 2016512006 A | 21-04-2016 |
| | | KR | 20140108793 A | 15-09-2014 |
| | | US | 2014241274 A1 | 28-08-2014 |
| | | US | 2018069680 A1 | 08-03-2018 |
| | | US | 2019379514 A1 | 12-12-2019 |
| | | WO | 2014133280 A1 | 04-09-2014 |

EPO FORM P0459

For more details about this annex : see Official Journal of the European Patent Office, No. 12/82